(19) Europäisches Patentamt
European Patent Office
Office européen des brevets

(11) **EP 3 851 656 B1**

(12) **EUROPÄISCHE PATENTSCHRIFT**

(45) Veröffentlichungstag und Bekanntmachung des Hinweises auf die Patenterteilung:
**13.12.2023   Patentblatt 2023/50**

(21) Anmeldenummer: **21020017.6**

(22) Anmeldetag: **15.01.2021**

(51) Internationale Patentklassifikation (IPC):
**F02D 41/02** (2006.01)   **F02D 41/14** (2006.01)
**F02D 41/40** (2006.01)   **F02D 41/22** (2006.01)
**G01M 15/10** (2006.01)   **G01M 17/00** (2006.01)

(52) Gemeinsame Patentklassifikation (CPC):
**F02D 41/0235; F02D 41/1452; F02D 41/22;**
**F02D 41/401;** F02D 2200/0614; F02D 2250/14;
Y02T 10/40

(54) **VERFAHREN UND VORRICHTUNG ZUR AUSWERTUNG VON IM PRAKTISCHEN FAHRBETRIEB EINES FAHRZEUGES ERMITTELTEN MESSWERTEN**

METHOD AND DEVICE FOR EVALUATING MEASURED VALUES DETERMINED DURING THE ACTUAL OPERATION OF A VEHICLE

PROCÉDÉ ET DISPOSITIF D'ÉVALUATION DES VALEURS MESURÉES DÉTERMINÉES LORS DE LA CONDUITE PRATIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA TN**

(30) Priorität: **16.01.2020   DE 102020100968**

(43) Veröffentlichungstag der Anmeldung:
**21.07.2021   Patentblatt 2021/29**

(73) Patentinhaber: **IAV GmbH**
**10587 Berlin (DE)**

(72) Erfinder: **Meyer, Sven**
**38518 Gifhorn (DE)**

(74) Vertreter: **Fukala, Georg**
**IAV GmbH**
**Ingenieurgesellschaft Auto und Verkehr**
**Entwicklungszentrum Chemnitz/Stollberg**
**Auer Straße 54**
**09366 Stollberg (DE)**

(56) Entgegenhaltungen:
**EP-A1- 0 582 112       WO-A1-2009/059854**
**DE-A1- 10 332 247       DE-A1-102014 006 319**
**DE-A1-102017 220 130    DE-B3-102007 057 311**

EP 3 851 656 B1

**Beschreibung**

Die vorliegende Erfindung betrifft ein Verfahren und eine Vorrichtung zur Auswertung von im praktischen Fahrbetrieb eines Fahrzeuges ermittelten Messwerten mit den Merkmalen der Patentansprüche.

Gemäß dem Dokument DE 10 2014 006 319 A1 ist es Stand der Technik, Abgasemissionen eines Verbrennungsmotors im praktischen Fahrbetrieb eines Fahrzeugs (Real Driving Emissions, RDE) zu messen, aufzuzeichnen und einem Betriebszustand des Fahrzeugs zuzuordnen, so dass eine Bestimmung der Ursachen der Abgasemissionen möglich ist. Dabei werden eine Abgaslaufzeit und eine Abgasanalysezeit berücksichtigt. Somit ist sichergestellt, dass Messwerte betreffend die Abgasemissionen demjenigen Fahrzeugzustand zugeordnet werden, welcher zum Zeitpunkt der Messungen durch eine Abgasanalyseeinrichtung vorlag. Insbesondere werden dazu die Messwerte betreffend die Abgasemissionen mit Signalen der Steuerung und/oder Regelung des Verbrennungsmotors korreliert. Die Abgaslaufzeit wird entweder auf Grundlage allgemein bekannter physikalischer Zusammenhänge, d. h. Abmessungen der Abgasanlage und vorherrschendem Volumenstrom berechnet oder durch Beimischen eines Additivs zum Abgas in Verbindung mit einer Zeitmessung bestimmt.

Gemäß der DE 10 2017 220 130 A1 sind ein Verfahren und eine Vorrichtung zur Diagnose eines Differenzdrucksensors eines Partikelfilters einer Brennkraftmaschine Stand der Technik, wobei der Differenzdrucksensor durch eine erste Druckleitung mit dem Abgassystem vor dem Partikelfilter und mit einer zweiten Druckleitung mit dem Abgassystem nach dem Partikelfilter verbunden ist. Es sind Mittel vorgesehen, die ein Differenzdrucksignal des Differenzdrucksensors für die Diagnose des Differenzdrucksensors hinsichtlich einer Frequenz auswerten.

Gemäß der WO 2009/059854 A1 sind ein Verfahren und eine Vorrichtung Stand der Technik, wobei eine Durchführung zumindest eines Teiles einer Adaption und Diagnose in einem vorgegebenen Fahrzustand gewährleistet werden kann. Das Verfahren weist dabei die Schritte auf: Bestimmen, ob das Fahrzeug einen vorgegebenen Fahrzustand erreicht hat; Durchführen einer Diagnose bei wenigstens einer der emissionsrelevanten Steuereinrichtungen, wenn festgestellt wird, dass das Fahrzeug den vorgegebenen Fahrzustand erreicht hat, wobei die Diagnose wenigstens einen Parameter eines Betriebspunktes wenigstens einer emissionsrelevanten Steuereinrichtung bestimmt und optimiert, wenn dieser von einem Sollbereich bzw. Sollwert abweicht; und Durchführen wenigstens eines Adaptionsabschnitts der Adaption bei wenigstens einer emissionsrelevanten Steuereinrichtung, wobei in der Adaption wenigstens ein Parameter mehrerer Betriebspunkte der emissionsrelevanten Steuereinrichtungen bestimmt und optimiert wird, wenn dieser von einem Sollbereich bzw. Sollwert abweicht.

Gemäß der DE 103 32 247A1 ist ein Verfahren zur variablen Laufzeitbestimmung an schmalbandigen Übertragungsgliedern bekannt. Dies wird dadurch erreicht, dass ein breitbandiges Eingangssignal sowohl eine Messstrecke als auch eine dazu parallel angeordnete Referenzstrecke durchläuft, die bis auf die Laufzeit eine ähnliche Übertragungsfunktion aufweist wie die Messstrecke, bevor beide Ausgangssignale einem gemeinsamen Kreuzkorrelator zugeführt werden. Durch Kreuzkorrelation der beiden Signale wird ein phasentreues, aber im Frequenzumfang reduziertes Abbild der Impulsantwort eines Laufzeitgliedes ermittelt, dessen Laufzeit infolge der Phasentreue die Differenz der Laufzeiten von Mess- minus Referenzstrecke ist. Die gesuchte Laufzeit kann somit als Summe aus der bestimmten Differenz und der bekannten Laufzeit der Referenzstrecke ermittelt werden.

Gemäß der DE 10 2007 057 311 B3 sind ein Verfahren und eine Vorrichtung zur Fehlererkennung bei emissionsrelevanten Steuereinrichtungen in einem Fahrzeug bekannt, wie beispielsweise der Einspritzung von Kraftstoff in einen Zylinder. Das Verfahren weist dabei die Schritte auf: Bestimmen, ob wenigstens ein Parameter, der einen Rückschluss auf das Emissionsverhalten der jeweiligen Steuereinrichtung zulässt, in einem Sollbereich liegt; liegt der Parameter außerhalb des Sollbereichs, so wird ein Fehlerwert abgespeichert, der mit einem Emissionszuwachs korreliert; liegt der Parameter im Sollbereich, so wird ein Fehlerwert von Null abgespeichert; wobei ein Gesamtfehlerwert aus allen Fehlerwerten der Steuereinrichtungen gebildet wird, und wobei eine Fehlermeldung ausgegeben wird, wenn der Gesamtfehlerwert einen vorbestimmten Schwellenwert überschreitet.

Gemäß der EP 0 582 112 A1 ist eine Vorrichtung bekannt, die sowohl eine hohe Flexibilität bei Geschwindigkeitsänderungen als auch eine hohe Messgenauigkeit gewährleistet. Diese Aufgabe wird dadurch gelöst, dass eine Laufzeitkorrelatorschaltung mit zwei in festem Abstand angeordneten Messpunkten und ein weiterer Signalgeber miteinander verbunden sind. Dieser Signalgeber gibt Signale proportional der Fadengeschwindigkeit ab. Dessen Signale werden dem Laufzeitkorrelator zur Bereichsvorgabe für das Einrasten des Regelkreises auf das richtige Totzeitmaximum zugeleitet. Dadurch kann die hohe Messgenauigkeit des Laufzeitkorrelators ohne erheblichen Aufwand an Rechenkapazität auch bei sich ändernden Fadengeschwindigkeiten genutzt werden. Die Schaltung läßt sich sowohl analog als auch digital ausführen. Die mit Hilfe des Laufzeitkorrelators ermittelte Geschwindigkeit kann auch über einen Integrator unmittelbar zur kumulativen Lauflängenbestimmung eines Textilfadens ausgewertet werden.

Es ist Aufgabe der vorliegenden Erfindung, die Auswertung von im praktischen Fahrbetrieb eines Fahrzeuges ermittelten Messwerten weiter zu verbessern.

Diese Aufgabe wird erfindungsgemäß mittels eines Verfahrens und einer Vorrichtung gemäß den Patentansprüchen gelöst. Erfindungsgemäß erfolgt die Bestimmung der Abgaslaufzeit und gegebenenfalls der Abgasanalysezeit bzw. der Zeitverzögerung zwischen einer Signaländerung am Eingang des Systems, welches einen Verbrennungsmotor mit einer Abgasleitung und einen mobilen Abgasanalysator umfasst, und einer korrespondierenden Signaländerung am Ausgang dieses Systems, durch eine parallele Anwendung von zwei unabhängigen Verfahren bzw. Ansätzen.

Einerseits erfolgt gemäß einem ersten Ansatz eine Bestimmung dieser Zeitverzögerung mittels einer Kreuzkorrelationsanalyse. Andererseits erfolgt gemäß einem zweiten Ansatz eine Bestimmung dieser Zeitverzögerung auf Grundlage bzw. in Verbindung mit einer Systemidentifikation durch eine Ermittlung der Abhängigkeit der Ausgangsgrößen des Systems von den Eingangsgrößen des Systems, insbesondere durch eine Kombination einer theoretischen und einer experimentellen Ermittlung der Abhängigkeit der Ausgangsgrößen des Systems von den Eingangsgrößen des Systems, das den Verbrennungsmotor, die Abgasanlage/Abgasleitung und den verwendeten (mobilen) Abgasanalysator umfasst und zwar in Verbindung mit einer Ausgleichsrechnung, d. h. einer Parameteridentifikation/-schätzung bzw. Regressionsanalyse.

Aufgrund der Linearitätsvoraussetzung wird für die Laufzeitbestimmung beider Konzepte der näherungsweise proportionale Zusammenhang zwischen der Einspritzmenge und der CO2-Konzentration bei einem Verbrennungsmotor, insbesondere einem Dieselmotor, ausgenutzt. Mit Ausnahme der Regeneration des Partikelfilters wird von der Abgasnachbehandlung zudem kaum Einfluss auf das CO2 genommen. Unter Kenntnis der Laufzeit des CO2 kann die Laufzeit für die anderen Emissionsarten über den bekannten Zeitversatz zu den anderen Analysatoren des Messgerätes korrigiert werden.

Wesentlich ist die Kombination der beiden Verfahren/Ansätze zur Bestimmung der gesuchten Zeitverschiebung sowie die Tatsache, dass das Verfahren zur Korrelation in einem Auswertungsfenster in einem Abgastest beim realen Betrieb des Fahrzeuges im Straßenverkehr quasi in Echtzeit realisiert wird. Es ist nicht notwendig, die gesamten Messdaten haben zu müssen, sondern es wird in Echtzeit (nachgelagert) berechnet. Darüber hinaus wird das Verfahren auf das gesamte Motorlast- und Drehzahlspektrum angewendet, um die unterschiedlichen Einflussfaktoren der Emissionspeaks in Abhängigkeit der Stellgrößen des Motors und der nichtlinearen (Abgas-)Optimierungsstrategie der Motorsteuerung zu berücksichtigen. Die so ermittelten Kennwerte der Korrelation werden durch geeignete Visualisierungsverfahren dem Nutzer entsprechend visualisiert.

Von Vorteil ist es, dass zwei redundante Pfade der Bestimmung der gesuchten Zeitverschiebung zugrunde liegen. Weiterhin ist es von Vorteil, dass das erfindungsgemäße Verfahren anhand realer Daten der RDE-Messfahrt durchgeführt wird. Eine vorhergehende Referenzmessung zur Ermittlung der Laufzeiten mit stimulierenden Eingangssignalen bzw. beigemischten Additiven, was den gerechtfertigten Aufwand des Gesamtkonzeptes übersteigen würde, entfällt.

Dadurch, dass die zwei vorgestellten Ansätze der Signal- und Systemtheorie jeweils zur Ermittlung einer unabhängigen Laufzeit/Zeitverschiebung eingesetzt werden, erhöht sich die Wahrscheinlichkeit einer korrekten Laufzeitbestimmung. D. h. durch eine Validierung der Ergebnisse der beiden Verfahren wird die Robustheit der Auswertung bei Abgastests der genannten Art erhöht.

Auf Basis der gemäß den beiden unabhängigen Ansätzen bestimmten hochgenauen, echtzeitbasierten präzisen Abgaslaufzeiten, ggf. einschließlich der Abgasanalysezeiten am zugrundeliegenden System ist eine Identifikation der potentiellen Ursachen für Abgaspeaks mit statistischer Bestimmung der Ursachenwahrscheinlichkeit möglich. Hierbei wird die hochgradige Nichtlinearität des Zusammenhangs zwischen Ursache und Wirkung auf das Motorkennfeld abgebildet und visualisiert (in Echtzeit). Dieses ermöglicht eine echtzeitbasierte Analyse der Emissionspeaks, was sowohl mit Messtechnik für die Parametrierung der Motorsteuerung interessant ist, aber auch theoretisch als Echtzeitfunktion im Motorsteuergerät implementiert werden könnte, um als Adaptionsfunktion im Steuergerät Emissionspeaks zu verringern.

Außerdem wird eine Vorrichtung bereitgestellt, die eingerichtet ist, das erfindungsgemäße Verfahren auszuführen.

Weitere vorteilhafte Ausgestaltungen der vorliegenden Erfindung sind dem nachfolgenden Ausführungsbeispiel sowie den abhängigen Patentansprüchen zu entnehmen.

Insbesondere im Zusammenhang mit der Typzulassung erfolgt eine Prüfung der real emittierten Emissionen (Real Driving Emissions, RDE) eines Fahrzeugs auf der Straße (RDE-Prüfung). Bei einem solchen Abgastest im Straßenverkehr wird ein mobiles Abgasmessgerät für den realen Betrieb des Fahrzeuges verwendet (Portable Emission Measurement System, PEMS). Die bei einem solchen (testweisen) praktischen/tatsächlichen Fahrbetrieb eines Fahrzeuges (in Zeitschritten) ermittelten und aufgezeichneten, d. h. gemessenen und abgespeicherten Messwerte betreffen somit zunächst die Abgasemissionen des Fahrzeuges, genauer des Verbrennungsmotors, mit dem das Fahrzeug angetrieben wird. Wie hinreichend bekannt, sind das insbesondere die im Abgas vorhandenen Konzentrationen von CO, CO2, HC, NO, NO2 und Partikeln, siehe hierzu zum Beispiel die allgemein bekannten gesetzlichen Vorgaben, u. a. (die konsolidierte Fassung der) Verordnung (EU) 2017/1151.

Während eines solchen Abgastests werden weiterhin Eingangs- und/oder Ausgangssignale eines oder mehrerer Steuergeräte des Fahrzeuges, insbesondere des Motorsteuergerätes des Verbrennungsmotors (in Zeitschritten) ermittelt und aufgezeichnet, d. h. gemessen und abgespeichert, siehe ebenfalls beispielsweise (die konsolidierte Fassung der) Verordnung (EU) 2017/1151 ("Signale und Daten des Motorsteuergeräts"). Ein mögliches Ausgangssignal des Motorsteuergerätes betrifft/repräsentiert die Einspritzmenge. Eingangssignale des Motorsteuergerätes sind u. a. Drehzahl und Last.

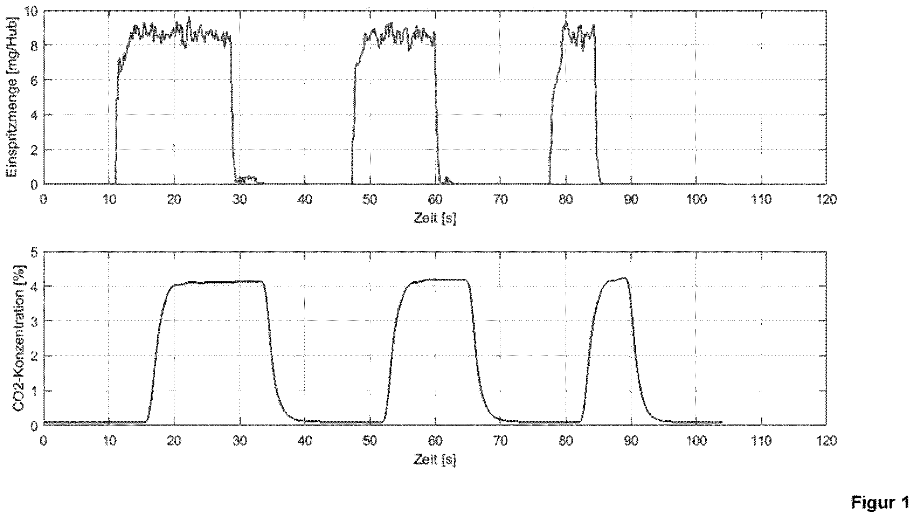

Die Messwerte/-daten betreffend die Abgasemissionen eines Fahrzeuges und die Messwerte/-daten betreffend (Eingangs- und/oder Ausgangs-) Signale eines (Motor-)Steuergerätes des Fahrzeuges (und/oder des Verbrennungsmotors) werden insbesondere zeitsynchron (jeweils in Zeitschritten, zu diskreten Zeitpunkten, in einem spezifischen Messraster, beispielsweise alle 10 Millisekunden) aufgenommen. In Figur 1 ist ein Ausschnitt einer solchen zeitsynchronen Ermittlung/Aufzeichnung der Einspritzmenge ("Signale und Daten des Motorsteuergeräts") und der im Abgas (des Fahrzeugs/Verbrennungsmotors) vorhandenen Konzentration von CO2 gezeigt. Diese (durch einen Kurvenzug miteinander verbundenen) Messpunkte wurden hierbei im Rahmen einer Referenzmessung bei einer Drehzahl der Kurbelwelle des Verbrennungsmotors von 3500 Umdrehungen pro Minute ermittelt, wobei drei aufeinanderfolgende Lastsprünge von jeweils 0% auf 30% durchgeführt wurden, woraus sich drei aufeinanderfolgende signifikante Änderungen der Einspritzmenge und folglich drei aufeinanderfolgende signifikante Änderungen der im Abgas vorhandenen Konzentration von CO2 ergeben haben. Die Einspritzmenge und die mittels des mobilen Abgasmessgeräts bestimmte Konzentration von CO2 im Abgas sind somit Referenzsignale und können zum Beispiel schon vor einem Abgastest an einem (stationären) Prüfstand ermittelt werden.

Nun besteht ein starker Zusammenhang zwischen diesen beiden Größen, wie bekannt gibt es zwischen diesen beiden Größen eine kausale Beziehung, d. h. es gibt eine (echte) Korrelation. Somit ist dieser Zusammenhang vorhersagbar. Andere Zusammenhänge bzw. Ursache-Wirkungs-Beziehungen zwischen Messwerten/Messdaten betreffend die Abgasemissionen eines Fahrzeuges und Messwerten/Messdaten betreffend (Eingangs- und/oder Ausgangs-) Signale eines (Motor-)Steuergerätes des Fahrzeuges (und/oder des) Verbrennungsmotors, die beim praktischen/tatsächlichen Fahrbetrieb eines Fahrzeuges ermittelt und aufgezeichnet wurden, sind jedoch nicht von vornherein klar oder erkennbar. Im Sinne einer effektiven und zielgerichteten Entwicklung ist es sehr zweckmäßig, diese Zusammenhänge sichtbar zu machen. Auf diese Weise kann dann bestimmt werden, ob solche und wenn ja, was für Ursache-Wirkungs-Beziehungen zwischen Messwerten/Messdaten betreffend die Abgasemissionen eines Fahrzeuges und Messwerten/Messdaten betreffend (Eingangs- und/oder Ausgangs-) Signale eines (Motor-)Steuergerätes des Fahrzeuges (und/oder des) Verbrennungsmotors bestehen. Mit anderen Worten ist es von großem Nutzen, auf Basis der beim praktischen/tatsächlichen Fahrbetrieb eines Fahrzeuges ermittelten und aufgezeichneten Messwerte/Messdaten quasi in Echtzeit bestimmen zu können, welche Größen/Daten (Eingangs- und/oder Ausgangssignale) des jeweiligen (Motor-)Steuergerätes für verschiedene "Emissionspeaks" verantwortlich sind. Mit noch anderen Worten ist eine gezielte Identifikation von relevanten Signalzusammenhängen wünschenswert.

Wie jedoch in Figur 1 gezeigt, sind die ermittelte Einspritzmenge und die (zeitsynchron dazu/ zeitgleich) ermittelte Konzentration von CO2 im Abgas zueinander (zeit-)verschoben, was natürlich im selben Maß auch für alle anderen Messwerte/Messdaten betreffend die Abgasemissionen eines Fahrzeuges und betreffend (Eingangs- und/oder Ausgangs-) Signale eines (Motor-)Steuergerätes des Fahrzeuges (und/oder des) Verbrennungsmotors zutrifft.

Diese Verschiebung zwischen dem ersten Referenzsignal, welches prinzipiell jedes Eingangs- und/oder Ausgangs-Signal eines Steuergerätes des Fahrzeuges sein kann, hier die "Einspritzmenge" und dem zweiten Referenzsignal (spezifische Konzentration einer Abgaskomponente, hier CO2) ergibt sich einerseits u. a. aus der für die Verbrennung benötigten Zeit sowie der Abgaslaufzeit und andererseits aus der Abgasanalysezeit. Die Abgasanalysezeit bzw. Ansprechzeit, d. h. das Übertragungsverhalten bzw. die Verzögerung/Zeitkonstante des verwendeten mobilen Abgasmessgerätes/des jeweiligen Abgasanalysators (T63/T90-Wert) ist prinzipiell bekannt. Nicht jedoch bekannt sind die für die Verbrennung benötigte Zeit sowie die Abgaslaufzeit vom Motor (von dem zumindest einen Auslass bzw. von dem zumindest einen Brennraum des Verbrennungsmotors) bis zum (jeweiligen) Abgasanalysator.

Ziel ist es daher, die Verschiebung/Zeitverzögerung zwischen dem ersten Referenzsignal und dem zweiten Referenzsignal, d. h. die Zeitspanne zwischen einer Signaländerung (Ausgangssignal des Motorsteuergerätes - "Einspritzmenge") am Systemeingang (Verbrennungsmotor) und der korrespondierenden Signalantwort (Konzentration der Komponente CO2 im Abgas) am Systemausgang (Ausgang Abgasanalysator) zu bestimmen.

Erfindungsgemäß erfolgt zunächst die Bestimmung dieser Verschiebung anhand von zwei voneinander unabhängigen Verfahren bzw. Ansätzen.

Einerseits erfolgt gemäß einem ersten Ansatz eine Bestimmung dieser Verschiebung mittels einer Kreuzkorrelationsanalyse (Kreuzkorrelationsfunktion).

Andererseits erfolgt gemäß einem zweiten Ansatz eine Bestimmung dieser Verschiebung auf Grundlage bzw. in Verbindung mit einer Systemidentifikation, insbesondere durch eine, d. h. anhand einer Kombination einer theoretischen und einer experimentellen Ermittlung der Abhängigkeit der Ausgangsgrößen des Systems von den Eingangsgrößen des Systems, das den Verbrennungsmotor, die Abgasanlage/Abgasleitung und den verwendeten (mobilen) Abgasanalysator umfasst und zwar in Verbindung mit einer Ausgleichsrechnung, d. h. einer Parameteridentifikation/-schätzung bzw. Regressionsanalyse.

Betreffend den ersten Ansatz erfolgt die Bestimmung einer Laufzeit/eines Zeitversatzes, d. h. vorliegend die Bestimmung der oben beschriebenen Verschiebung, mittels einer Kreuzkorrelationsanalyse, und zwar insbesondere dadurch, dass das Produkt zwischen zwei verschiedenen Signalen gebildet und dieses integriert wird. Dadurch lassen sich, wie bekannt, die Überdeckungen von Signalen messen. Das Integral wird insbesondere über der variablen Verschiebung des Ausgangssignals relativ zum Eingangssignal gebildet. Somit steht das Korrelationsintegral in Abhängigkeit der Verschiebung. Die gesuchte Verschiebung der Signale befindet sich bei der Verschiebung, für die das Korrelationsintegral maximal ist.

Im vorliegenden Fall erfolgt die Bestimmung der relevanten Laufzeit/des hier interessierenden Zeitversatzes, d. h. die Bestimmung der oben beschriebenen Verschiebung bzw. die Bestimmung der Zeitspanne zwischen einer Signaländerung (Ausgangssignal des Motorsteuergerätes - "Einspritzmenge"; erstes Referenzsignal) am Systemeingang (Verbrennungsmotor) und der korrespondierenden Signalantwort (Konzentration der Abgaskomponente $CO_2$; zweites Referenzsignal) am Systemausgang (Ausgang Abgasanalysator) der zugrundeliegenden Strecke auf Basis realer Messdaten, die während des praktischen Fahrbetriebs eines Fahrzeugs (in Zeitschritten, zeitsynchron zueinander) ermittelt werden. Diese Information, d. h. die beschriebene Verschiebung wird bevorzugt aus der Kreuzkorrelationsfunktion erhoben, die die Faltung von Impulsantwort und Autokorrelationsfunktion des Eingangssignals beinhaltet, wie im weiteren Verlauf konkret beschrieben wird. Eine Stimulation des Systems mit spezifischen Eingangssignalen, also insbesondere mit weißem Rauschen bzw. einer Annäherung an solche Signale erfolgt nicht.

D. h. allgemein ist die Kreuzkorrelationsfunktion $\varphi_{uy}$ [I]

$$\varphi_{uy}(\tau) = \int_{-\infty}^{\infty} y(t)\, u(t-\tau)\, \Delta t \ ,$$

wobei u das Eingangssignal (erstes Referenzsignal; "Einspritzmenge"), *y* das Ausgangssignal (zweites Referenzsignal, "Konzentration der Abgaskomponente $CO_2$"), $\tau$ die Zeitverschiebung (die hier gesuchte "Verschiebung", Laufzeit/Zeitversatz) und t die Zeit (allgemein, in Bezug auf die Aufzeichnung der genannten Messdaten) repräsentieren.

Wie beispielsweise gemäß Föllinger, Otto: Regelungstechnik, Einführung in die Methoden und ihre Anwendung, 11. Auflage; VDE-Verlag Berlin, 2013. bekannt, ist die Kreuzkorrelationsfunktion aus Eingangssignal und Ausgangssignal gleich dem Faltungsprodukt aus der Impulsantwort des Übertragungssystems bzw. der zugrundeliegenden Strecke und der Autokorrelationsfunktion des Eingangssignals. D. h. wenn die Systemantwort eines linearen zeitinvarianten Systems [II]

$$y(t) = g(\tau) * u(t-\tau) = \int_{-\infty}^{\infty} g(\tau)\, u(t-\tau)\, \Delta t$$

ist, wobei g die Impulsantwort repräsentiert, dann ergibt sich durch ein Einsetzen von [II] in [I] der Zusammenhang [III]

$$\varphi_{uy}(\tau) = \int_{-\infty}^{\infty} g(\tau)\, \varphi_{uu}(t-\tau)\, \Delta t,$$

d. h. die Kreuzkorrelationsfunktion $\varphi_{uy}(\tau)$ ergibt sich aus der Faltung von Impulsantwort und Autokorrelationsfunktion und im Ergebnis liegt die gesuchte Verschiebung beim Maximum von $\varphi_{uy}(\tau)$.

Bezüglich dieser allgemein bekannten Zusammenhänge möchten wir hinsichtlich der Nacharbeitbarkeit der vorliegenden Beschreibung ausdrücklich auf die vielen dem Fachmann zum Anmeldetag zur Verfügung stehenden Literaturquellen zur Herleitung und Anwendung der Kreuzkorrelationsanalyse verweisen.

Konkret werden erfindungsgemäß, entsprechend dem hier dargestellten ersten Ansatz, die Messwerte/-daten betreffend die Abgase bzw. die Abgasemissionen eines Fahrzeuges, d. h. die Ausgangssignale y des Übertragungssystems mit zumindest einem Verbrennungsmotor und einem Abgasanalysator, insbesondere die in Figur 1 gezeigte im Abgas vorhandene Konzentration von $CO_2$ (zweites Referenzsignal) und die Messwerte/-daten betreffend die (Eingangs- und/oder Ausgangs-) Signale eines (Motor-)Steuergerätes des Fahrzeuges, d. h. die Eingangssignale u des zugrunde liegenden Systems, insbesondere die in Figur 1 gezeigte Einspritzmenge (erstes Referenzsignal) anhand der Gleichungen [I] bis [III] zur Bestimmung der gesuchten Verschiebung $\tau$ bzw. zur Ermittlung des Maximums von $\varphi_{uy}(\tau)$ herangezogen.

Allein schon anhand der nunmehr bekannten Verschiebung zwischen dem ersten Referenzsignal ("Einspritzmenge") und dem zweiten Referenzsignal (Konzentration der Abgaskomponente $CO_2$) kann auf Basis der beim praktischen/tatsächlichen Fahrbetrieb des Fahrzeuges ermittelten und aufgezeichneten Messwerte/Messdaten quasi in Echtzeit bestimmt werden, welche Größen/Daten (Eingangs- und/oder Ausgangssignale) des jeweiligen (Motor-)Steuergerätes für verschiedene "Emissionspeaks" verantwortlich sind. D. h. die jetzt bekannte Verschiebung zwischen dem ersten Referenzsignal und dem zweiten Referenzsignal wird auf beliebige beim praktischen/tatsächlichen Fahrbetrieb eines Fahrzeuges ermittelte und aufgezeichnete Messwerte/Messdaten betreffend Größen/Daten (Eingangs- und/oder Ausgangssignale) des jeweiligen (Motor-)Steuergerätes sowie betreffend die mittels des mobilen Abgasmessgeräts ermittelten (und aufgezeichneten) Abgasemissionen des Fahrzeuges übertragen bzw. angewendet, so dass auch hier die Ursache-Wirkungs-Beziehungen zwischen Messwerten/Messdaten betreffend die Abgasemissionen eines Fahrzeuges und Messwerten/Messdaten betreffend (Eingangs-und/oder Ausgangs-) Signale eines (Motor-)Steuergerätes des Fahrzeuges (und/oder des) Verbrennungsmotors erkannt werden können.

Zum Beispiel kann das aufgezeichnete (Stell-)Signal betreffend die Abgasrückführrate (Ausgangssignal des Motorsteuergerätes) unter Verwendung/in Analogie zu der nunmehr bekannten Verschiebung zwischen dem ersten Referenzsignal ("Einspritzmenge") und dem zweiten Referenzsignal (Konzentration der Abgaskomponente CO2) gegenüber dem aufgezeichneten Signal der im Abgas vorhandenen Konzentrationen von NOx (NO+NO2) verschoben werden, so dass beispielsweise erkannt werden kann, dass hier ein ursächlicher Signalzusammenhang besteht, also eine Änderung der Abgasrückführrate eine unerwünschte starke Überhöhung der im Abgas vorhandenen Konzentrationen von NOx (NO+NO2) verursacht, die noch durch eine Kalibrierung der Funktionen der Motorsteuerung zu unterbinden ist, im weiteren Verlauf.

In einer Ausführung der Bestimmung der gesuchten Verschiebung mittels einer Kreuzkorrelationsanalyse (Kreuzkorrelationsfunktion) erfolgt vor der Kreuzkorrelationsanalyse durch Anwendung der Gleichungen [I] bis [III] zur Bestimmung der gesuchten Verschiebung/Laufzeit $\tau$ bzw. zur Ermittlung des Maximums von $\varphi_{uy}(\tau)$ eine Filterung bzw. (zeitliche) Beeinflussung des Eingangssignals u bzw. des ersten Referenzsignals mit dem Ansprechverhalten/Übertragungsverhalten des verwendeten mobilen Abgasmessgerätes/des jeweiligen Abgasanalysators, wobei der Abgasanalysator insbesondere ein Ansprechverhalten eines PT1-Übertragungsgliedes aufweist, Im Ergebnis erfolgt dann die Bestimmung der gesuchten Verschiebung mittels einer Kreuzkorrelationsanalyse mittels des gefilterten ersten Referenzsignals und des (unbeeinflussten) zweiten Referenzsignals. D. h. es erfolgt eine Bestimmung der gesuchten Verschiebung zwischen den Eingangssignalen des Systems (z. B. Einspritzmenge) und Ausgangsgrößen des Systems (Konzentration von spezifischen Abgaskomponenten am Ausgang des Abgasanalysators) auf Basis eines schon vorkonditionierten (Eingangs-)Signals. Im Ergebnis wird dann mittels der Kreuzkorrelationsanalyse nur noch die durch die Notwendigkeit des Transports des Abgases von der Verbrennungskraftmaschine (einschließlich der sehr kurzen und daher an sich zu vernachlässigenden für die Verbrennung benötigten Zeit) zu dem Abgasanalysator bedingte Laufzeit, also die Abgaslaufzeit von Verbrennungskraftmaschine zum (Eingang des) Abgasanalysator(s) ermittelt.

Bei einer anschließenden Bestimmung, welche Größen/Daten (Eingangs- und/oder Ausgangssignale) des jeweiligen (Motor-)Steuergerätes für verschiedene "Emissionspeaks" verantwortlich sind, ist es dann natürlich erforderlich, sowohl die wie zuvor beschrieben ermittelte Abgaslaufzeit von Verbrennungskraftmaschine zum (Eingang des) Abgasanalysator(s) und das zur Filterung bzw. (zeitlichen) Beeinflussung des Eingangssignals u bzw. des ersten Referenzsignals herangezogene Ansprechverhalten/Übertragungsverhalten des verwendeten mobilen Abgasmessgerätes/des jeweiligen Abgasanalysators, d. h. die Ansprechzeit des Abgasanalysators zu berücksichtigen.

Mit anderen Worten sind Abgaslaufzeit und Abgasanalysezeit zu beachten (zu addieren) oder es sind die aufgezeichneten Messwerte/Messdaten, welche Größen/Daten (Eingangs- und/oder Ausgangssignale) des jeweiligen (Motor-)Steuergerätes betreffen, jeweils mit dem Ansprechverhalten/Übertragungsverhalten des verwendeten mobilen Abgasmessgerätes/des jeweiligen Abgasanalysators zu filtern und weiterhin die wie zuvor beschrieben ermittelte Abgaslaufzeit von Verbrennungskraftmaschine zum (Eingang des) Abgasanalysator(s) für eine gezielte Identifikation von relevanten Signalzusammenhängen zwischen den Eingangs- und/oder Ausgangssignalen betreffend das jeweilige Steuergerät und den Messwerten/Messdaten betreffend die Abgasemissionen eines Fahrzeuges zu berücksichtigen.

Jedoch tritt im Zusammenhang der oben beschriebenen Bestimmung der Verschiebung zwischen dem ersten und dem zweiten Referenzsignal ein Glättungseffekt bei der Impulsantwort g auf, der die Prägnanz des Korrelationsmaximums (von $\varphi_{uy}(\tau)$) vermindert und somit für zunehmende Ungenauigkeit bei der Bestimmung der Verschiebung beiträgt. Wegen der Ungenauigkeit des ersten Ansatzes in Verbindung mit einer Kreuzkorrelationsanalyse ist es daher erfindungsgemäß weiterhin vorgesehen, eine Bestimmung dieser Verschiebung auch auf Grundlage eines weiteren Ansatzes, nämlich einer Systemidentifikation durchzuführen, so dass im Ergebnis zwei Angaben der gesuchten Verschiebung vorliegen.

D. h. es erfolgt eine Verifikation der mittels des ersten Ansatzes gewonnenen Erkenntnisse mit den mittels eines zweiten Ansatzes gewonnenen Erkenntnissen. Hinsichtlich der Systemidentifikation erfolgt insbesondere eine Parameteridentifikation einer geeigneten/zutreffenden Übertragungsfunktion des vorausgesetzten/zugrundeliegenden Systems, umfassend einen Verbrennungsmotor, eine Abgasanlage/Abgasleitung und einen (mobilen) Abgasanalysator.

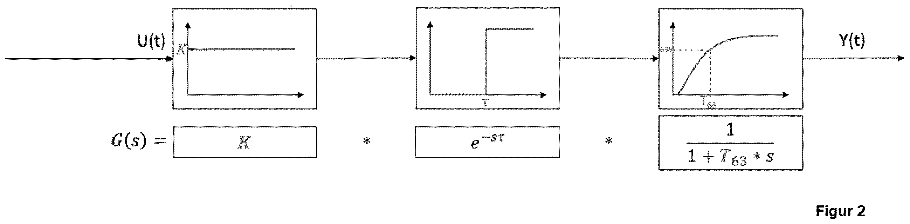

Unter Berücksichtigung der in Figur 2 gezeigten drei Übertragungsglieder (P-Glied betreffend die Verbrennung, Totzeit-Glied betreffend die Abgasanlage, PT1-Glied betreffend den Abgasanalysator) ergibt sich im Bildbereich folgende Übertragungsfunktion $G(s)$ für das System mit $U(s)$ als Eingangssignal (erstes Referenzsignal; "Einspritzmenge") und mit $Y(s)$ als Ausgangssignal (zweites Referenzsignal; "Konzentration der Abgaskomponente CO2"):

$$(1)\ G(s)=Y(s)U(s)=K*e^{-sTt}*1/1+T63*s,$$

wobei $K$ einem Proportionalitätsfaktor entspricht, da für die Verbrennung im Verbrennungsmotor zwischen dem Ausgangssignal des Motorsteuergerätes und der Qualität des Abgases bzw. der Konzentrationen einzelner Komponenten, insbesondere CO2 im Abgas, ein lineares Systemverhalten vorausgesetzt wird und die Abgasanlage aus systemtechnischer Sicht auf die (Roh-)Emissionen als reines Totzeitsystem betrachtet wird und angenommen wird, dass die Abgasnachbehandlungssysteme keinen relevanten Einfluss auf das Emissionssignal besitzen.

Die Übertragungsfunktion enthält die (noch zu bestimmenden) Parameter des Proportionalitätsfaktors $K$, der Totzeit $Tt$ und der (ggf. im Voraus bekannten) Analysator-Zeitkonstante T63. Zusammengefasst entspricht diese Übertragungsfunktion nach Rücktransformation in den Zeitbereich folgender Differentialgleichung:

$$(2) \quad Y(t)=K*U(t-Tt)-T63\dot{Y}(t),$$

wobei $U$ das Eingangssignal (erstes Referenzsignal; "Einspritzmenge"), $Y$ das Ausgangssignal (zweites Referenzsignal, "Konzentration der Abgaskomponente CO2") ist.

Die diskrete Differenzengleichung, die zur Identifikation der (System-)Parameter benötigt wird, lautet mit dem Index $i$, der Abtastzeit $\Delta t$ und einem zusätzlich eingeführten Offset für die Emissionskonzentration der Umgebungsluft yo:

$$(3) \quad y(i\Delta t)=yo+Ku((i-Tt)\Delta t)-T63y(i\Delta t)-y((i-1)\Delta t)\Delta t.$$

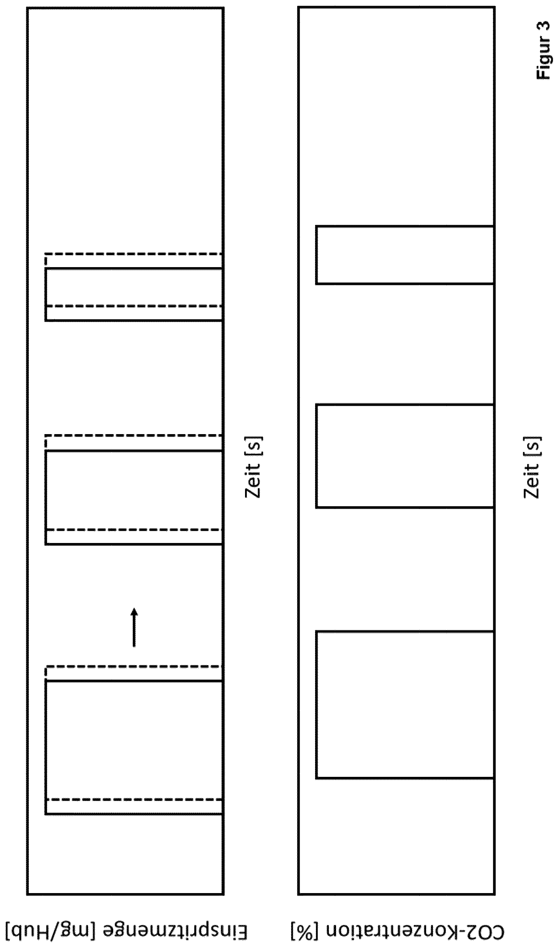

Gemäß Figur 3 sind nochmals, jedoch nur schematisch, die Zusammenhänge entsprechend Figur 1 gezeigt, also das erste und das zweite Referenzsignal, und zwar zum Zwecke einer Erläuterung der weiteren Schritte der Bestimmung der gesuchten Verschiebung anhand des zweiten Ansatzes. Im oberen Diagramm ist das erste Referenzsignal, also die Einspritzmenge, d. h. das Eingangssignal $u$ des Systems gezeigt. Im unteren Diagramm ist das zweite Referenzsignal, also die Konzentration der Abgaskomponente CO2, d. h. das Ausgangssignal $y$ gezeigt. Die in Figur 3 gezeigten Signale werden wie im Zusammenhang mit Figur 1 erläutert bereitgestellt.

Die Bestimmung der gesuchten Verschiebung anhand des zweiten Ansatzes ist dadurch gekennzeichnet, dass eine Schätzung von Parametern der Differenzengleichung (3) mittels einer Ausgleichsrechnung, d. h. einer Regressionsanalyse (lineare Regression, Methode der kleinsten Quadrate) erfolgt, ausgehend von den gemessenen/aufgezeichneten Daten des ersten Referenzsignals $u$ und des zweiten Referenzsignals $y$, einschließlich der (zunächst noch vorhandenen, siehe Erklärung dazu unten) systembedingten Verschiebung (Abgaslaufzeit plus Analysezeit) zwischen dem ersten Referenzsignal u und dem zweiten Referenzsignal $y$.

Dies erfolgt durch ein iteratives, d. h. schrittweises Verschieben, also einem Variieren der Lage des ersten Referenzsignals $u$ und des zweiten Referenzsignals $y$ zueinander, wobei insbesondere das erste Referenzsignal $u$ gegenüber dem zweiten Referenzsignal $y$ verschoben wird, wobei für jede(n) Iteration(s-Schritt) eine (lineare) Parameteridentifikation der Differenzengleichung (3) bzw. Identifikation von Parametern der Differenzengleichung (3) durchgeführt wird.

Das Variieren der Lage des ersten Referenzsignals $u$ und des zweiten Referenzsignals $y$ zueinander erfolgt insbesondere in Abhängigkeit der Zeitschritte bzw. der diskreten Zeitpunkte/dem Messraster gemäß denen/dem die Messwerte/-daten betreffend die Abgasemissionen eines Fahrzeuges und die Messwerte/-daten betreffend (Eingangs- und/oder Ausgangs-) Signale eines (Motor-)Steuergerätes des Fahrzeuges (und/oder des Verbrennungsmotors) jeweils (zeitsynchron) aufgenommen wurden. D. h. der erste Iterationsschritt und der darauffolgende weitere Iterationsschritt sind um einen Zeitschritt zueinander versetzt, beispielsweise um 10 Millisekunden.

Dadurch, dass das erste Referenzsignal $u$ und das zweite Referenzsignal $y$ (anfangs/zunächst noch) relativ weit zueinander verschoben sind, nämlich im ersten Schritt um die noch unbekannte systembedingte Verschiebung, wie in Figur 1 gezeigt, gelingt die Anpassung des zweiten Referenzsignals $y$ durch das Modell gemäß der Differenzengleichung (3) nur wenig bzw. unzureichend.

Infolgedessen verursacht die Schätzung von Parametern der Differenzengleichung (3) bzw. die angewendete Ausgleichsrechnung/Regression relativ große Abweichungen. D. h. die Fehler, Fehlerterme bzw. Residuen oder auf den Residuen aufbauende bzw. daraus abgeleitete Maße sind (betragsmäßig) vergleichsweise groß.

Anders gesagt ist die Schätzung von Parametern der Differenzengleichung (3) noch derart unzureichend, dass die Abweichung bzw. die Differenz zwischen dem anhand der Differenzengleichung (3) nachgebildeten zweiten Referenzsignal $y$ (Schätzwert), welches entsteht, wenn in die Differenzengleichung (3) Näherungslösungen der Parameter der Differenzengleichung (3) eingesetzt werden (in Verbindung mit dem verschobenen ersten Referenzsignal $u$), und dem (gemäß Figur 1) gemessenen zweiten Referenzsignal (Messwert), also das Residuum, vergleichsweise groß ist.

D. h. der Betrag der Abweichung weist einen relativ großen Wert auf. Im Sinne der vorliegenden Erfindung entspricht diese Abweichung z. B. dem (durchschnittlichen oder maximalen) Fehler, Fehlerterm bzw. Residuum oder einem darauf aufbauenden Maß, wie insbesondere die Residuen-Quadratsumme/das Bestimmtheitsmaß bzw. die (insbesondere quadrierte) Summe der Fehlerterme. Die Summe der Residuen-Quadrate bezeichnet, wie allgemein bekannt in der Statistik, die Summe der quadrierten (Kleinste-Quadrate-) Residuen, d. h. Abweichungen zwischen Beobachtungswerten (hier dem gemessenen zweiten Referenzsignal $y$ gemäß Figur 1) und den vorhergesagten Werten (hier zweitem geschätzten Referenzsignal $y$) aller Beobachtungen.

D. h. im Rahmen einer während des jeweiligen Iterationsschrittes oder im Anschluss daran erfolgenden Modellvalidierung bzw. Analyse der (verbleibenden bzw. sich ergebenden) Fehlerterme/Residuen zeigt sich, dass die Abweichungen/Residuen anfangs noch groß sind, im ersten Iterationsschritt einer Variation der Lage des ersten Referenzsignals $u$ und des zweiten Referenzsignals $y$ relativ zueinander, bei der jeweiligen Parameteridentifikation der Differenzengleichung (3), ausgehend von dem Ausgangszustand einer Verschiebung/Lage dieser beiden Signale relativ zueinander, d. h. ausgehend von der Identifikationsmessung gemäß den Figuren 1 und 3.

Da sich im weiteren Verlauf, d. h. im nächsten Iterationsschritt, wie in Figur 3 anhand eines horizontal ausgerichteten Pfeiles bzw. gestrichelten Linien angedeutet, infolge einer weiteren Variation der Lage bzw. Verschiebung des ersten Referenzsignals $u$ und des zweiten Referenzsignals $y$ zueinander, die Übereinstimmung zwischen dem ersten Referenzsignal $u$ und dem zweiten Referenzsignal $y$ vergrößert, gelingt in diesem (zweiten bzw. weiteren) Iterationsschritt und auch den noch weiteren nachfolgenden Iterationsschritten die Anpassung des zweiten Referenzsignals $y$ durch das Modell gemäß der Differenzengleichung (3) immer besser, so dass die Schätzung von Parametern der Differenzengleichung (3) gegenüber dem vorherigen Iterationsschritt geringere Abweichungen hervorbringt, d. h. die Fehler, Fehlerterme bzw. Residuen oder auf den Residuen aufbauende Maße werden vergleichsweise kleiner.

In den noch weiteren nachfolgenden Iterationsschritten ergibt sich dann bei einem Iterationsschritt, insbesondere dem Iterationsschritt, bei dem eine größtmögliche Übereinstimmung zwischen dem ersten Referenzsignal $u$ und dem zweiten Referenzsignal $y$ besteht, ein Minimum hinsichtlich der Fehler, Fehlerterme bzw. Residuen oder auf den Residuen aufbauende Maße bezüglich die Ausgleichsrechnung/Regression, da die Anpassung des zweiten Referenzsignals $y$ durch das Modell gemäß der Differenzengleichung (3) gegenüber den weiteren Iterationsschritten in diesem Iterationsschritt am besten gelingt.

Praktisch werden somit bei der angewendeten Ausgleichsrechnung/Regressionsanalyse lediglich die Parameter $K$ (Proportionalitätsfaktor) und $T63$ (Analysator-Zeitkonstante) der Differenzengleichung (3) geschätzt. Sofern die Analysator-Zeitkonstante $T63$ im Voraus bekannt ist, wird nur der Parameter $K$ (Proportionalitätsfaktor) der Differenzengleichung (3) geschätzt. D. h. der Parameter betreffend die Totzeit $Tt$ wird aus der Ausgleichsfunktion/Regressionsfunktion extrahiert bzw. anhand der beschriebenen Anwendung der Ausgleichsrechnung/Regression gewonnen.

Praktisch ergibt sich die Totzeit $Tt$ bzw. ergibt sich die gesuchte (systembedingte) Verschiebung des ersten Referenzsignals $u$ und des zweiten Referenzsignals $y$ zueinander im weiteren Verlauf anhand der in den einzelnen Iterationsschritten erfolgenden Modellvalidierungen bzw. der jeweiligen Analyse der Residuen (oder daraus abgeleiteten Vergleichsgrößen), die sich infolge der Parameterschätzungen der Differenzengleichung (3) bei den einzelnen (Iterations-)Schritten bzw. den einzelnen Variationen der Lage des ersten Referenzsignals $u$ und dem zweiten Referenzsignal $y$ zueinander ergeben.

D. h. die Totzeit $Tt$ bzw. die gesuchte (systembedingte) Verschiebung des ersten Referenzsignals $u$ und des zweiten Referenzsignals $y$ zueinander ergibt sich nunmehr aus der Anzahl der Iterationsschritte, welche ausgehend von der in Figur 1 gezeigten noch unbekannten systembedingten Verschiebung des ersten Referenzsignals $u$ und des zweiten Referenzsignals $y$ bis zum Auffinden desjenigen Iterationsschrittes durchgeführt wurden, bei dem eine derartige bzw. größtmögliche Übereinstimmung zwischen dem ersten Referenzsignal $u$ und dem zweiten Referenzsignal $y$ besteht, so dass daraus ein Minimum hinsichtlich der Fehler, Fehlerterme bzw. Residuen oder auf den Residuen aufbauende Maße resultiert, da die Anpassung des zweiten Referenzsignals $y$ durch das Modell gemäß der Differenzengleichung (3) gegenüber den weiteren Iterationsschritten in diesem Iterationsschritt am besten gelingt. Dabei ergibt sich die Totzeit $Tt$ bzw. die gesuchte (systembedingte) Verschiebung des ersten Referenzsignals $u$ und des zweiten Referenzsignals $y$ zueinander nicht nur aus der Anzahl der zuvor beschriebenen Iterationsschritte, sondern natürlich weiterhin in Verbindung mit der Zeitspanne zwischen den einzelnen Iterationsschritten/Variationsschritten, welche insbesondere jeweils einen Zeitschritt zueinander versetzt sind, beispielsweise um 10 Millisekunden.

Mit anderen Worten wird mittels der Differenzengleichung (3) das zweite Referenzsignal $y$ bzw. dessen Bildungsvorschrift beschrieben und zwar in Abhängigkeit des ersten Referenzsignals $u$ sowie in Abhängigkeit der noch unbekannten und noch zu bestimmenden Verschiebung zwischen dem ersten Referenzsignal $u$ und dem zweiten Referenzsignal $y$, wobei sich die Verschiebung aus der noch unbekannten Totzeit $Tt$ und der (ggf. vorher bekannten) Analysator-Zeitkonstante $T63$ ergibt.

In Verbindung mit einer Ausgleichsrechnung bzw. Regressionsanalyse erfolgt dann, ausgehend von der sich im Rahmen einer Identifikationsmessung ergebenden systembedingten Verschiebung zwischen dem ersten Referenzsignal $u$ und dem zweiten Referenzsignal $y$ gemäß den Figuren 1 und 3, im weiteren Verlauf, in Verbindung mit einer schrittweisen Variation der Verschiebung zwischen dem ersten Referenzsignal $u$ und dem zweiten Referenzsignal $y$, d. h. einer gewissermaßen testweisen oder zwischenzeitlichen, in einzelnen Schritten erfolgenden Änderung der Lage des ersten Referenzsignals $u$ gegenüber dem zweiten Referenzsignal $y$ und bei den einzelnen Schritten dann vorliegenden (sich bis zu einer bestmöglichen Überdeckung/Übereinstimmung des ersten Referenzsignals *u* und des zweiten Referenzsignals *y* verkleinernden und dann wieder vergrößernden) Verschiebung zwischen dem ersten Referenzsignal *u* und dem zweiten Referenzsignal *y,* eine Modellierung der Beziehung zwischen dem (abhängigen) zweiten Referenzsignal *y* und dem (der unabhängigen Variablen entsprechenden) ersten Referenzsignal *u* auf Basis der Differenzengleichung (3) durch Bestimmung der Parameter der Differenzengleichung (3) sowie eine Bewertung bzw. Überprüfung, ob die mittels der Ausgleichsrechnung/Regressionsanalyse gewonnenen Parameter der Differenzengleichung (3) in Verbindung mit dem ersten Referenzsignal *u* eine Abweichung (einen Fehler/ein Residuum oder eine daraus abgeleitete Größe) verursachen/hervorbringen, die gegenüber der Abweichung gemäß den vorherigen oder nachfolgenden (Iterations-)Schritten mit anderer Lage des ersten Referenzsignals *u* gegenüber dem zweiten Referenzsignal *y,* kleiner bzw. minimal ist, wobei dann, wenn dieses Minimum bekannt ist, bestimmt werden kann bzw. lokalisiert wird, wie groß die gesuchte, systembedingte Verschiebung zwischen dem ersten Referenzsignal *u* und dem zweiten Referenzsignal *y* ist.

Mit noch anderen Worten wird beim zweiten Ansatz zur Bestimmung der Parameter der Differenzengleichung (3) die lineare Regression genutzt. Durch den Parameter der Totzeit *Tt* handelt es sich bei der Differenzengleichung (3) um ein nichtlineares System. Um die lineare Regression trotzdem verwenden zu können, muss der Totzeitparamater *Tt* aus der Regressionsfunktion extrahiert werden. Dies bedeutet, dass die Schätzung der Systemparameter lediglich für die restlichen, linearen Parameter (*K, T63*) durchgeführt wird. Diese lineare Systemidentifikation wird iterativ für alle zu untersuchenden Verschiebungen des Ausgangssignals *Y* (zweites Referenzsignal) durchgeführt. Die Verschiebung, bei der die lineare Regression ihre minimale Residuensumme aufweist, entspricht der gesuchten Totzeit *Tt* des Systems. Zusätzlich kann dem Regressionsverfahren die Zeitkonstante T63 bei Kenntnis des Ansprechverhaltens der Analysatoren vorgegeben werden. Somit können Vorkenntnisse des Systems, wie sie beispielsweise für die Abgas-Analysatoren vorhanden sind, für die Parameteridentifikation genutzt werden. Zu Beginn der Laufzeitbestimmung wird die Signaldynamik des Ausgangssignals bzw. der betreffenden Signale ausgewertet, um ungenaue Ergebnisse bei zu geringer Signaldynamik auszuschließen. Die Dynamikauswertung gibt die relative Streuung des Signals/der betrachteten Signale innerhalb des Auswertungsfensters wider. Liegt diese über dem vorgegebenen Schwellenwert, wird die weitere Auswertung ausgelöst. In einer Schleife wird die Verschiebung der Signale innerhalb des zu untersuchenden Laufzeitintervalls inkrementiert. Für jede Iteration wird die lineare Parameteridentifikation der Differenzengleichung durchgeführt. Für den Fall, dass die Zeitkonstante des PEMS-Analysators (*T63*) bekannt ist, wird diese in der Parameterschätzung vorgegeben. Andernfalls kann die Zeitkonstante ebenfalls mit der Systemidentifikation ermittelt werden. Die gesuchte Verschiebung des Ausgangssignals, also die Verschiebung des zweiten Referenzsignals *y* gegenüber dem ersten Referenzsignal *u* stellt sich zum Zeitpunkt der minimalen Residuensumme ein. Nach dem vollständigen Durchlaufen des Verschiebungsintervalls wird die Laufzeitbestimmung über Kreuzkorrelation des (bevorzugt) gefilterten Eingangssignals mit dem Ausgangssignal durchgeführt, gemäß dem ersten Ansatz. Die Kreuzkorrelationsfunktion wird im Intervall der zu untersuchenden Laufzeiten nach lokalen Maxima ausgewertet.

Im Ergebnis stehen somit die Ergebnisse der Bestimmung der gesuchten Verschiebung anhand von zwei voneinander unabhängigen Verfahren bzw. Ansätzen für eine weitere Verarbeitung bereit. D. h. nach der doppelten/parallelen Bestimmung der gesuchten Verschiebung erfolgt erfindungsgemäß insbesondere eine Gegenüberstellung der Ergebnisse, also der anhand der zwei voneinander unabhängigen Verfahren/Ansätze bestimmten gesuchten Verschiebungen. Die anhand der lokalen Maxima der Kreuzkorrelationsfunktion ermittelte Verschiebung zwischen Signalen am Eingang des zugrundeliegenden Systems (umfassend Verbrennungskraftmaschine, Abgasanlage und Abgasanalysator) und Signalen am Ausgang dieses Systems werden der anhand der Systemidentifikation bereitgestellten Verschiebung gegenübergestellt. Wird eine vorgegebene Toleranz zwischen den gemäß den beiden unabhängigen Ansätzen bereitgestellten Verschiebungen der Signale eingehalten, gilt beispielsweise die Bestimmung der zuvor unbekannten Verschiebung als erfolgreich. Im weiteren Verlauf kann dann entweder nur eine der beiden bestimmten Verschiebungen einer weiteren Verarbeitung zugrunde gelegt werden oder es erfolgt eine weitere Verarbeitung beider unabhängig voneinander bestimmter Verschiebungen, beispielsweise eines aus den beiden unabhängig voneinander bestimmten Verschiebungen gewonnenen Wertes, zum Beispiel eines Mittelwertes der beiden unabhängig voneinander bestimmten Verschiebungen.

Mit anderen Worten werden diese beiden dann vorliegenden und auf unterschiedlichen Grundlagen bestimmten Angaben zur gesuchten Verschiebung/Zeitverzögerung zwischen dem ersten Referenzsignal ("Einspritzmenge") und dem zweiten Referenzsignal (Konzentration der Abgaskomponente $CO_2$) im weiteren Verlauf insbesondere einander gegenübergestellt, wobei in Abhängigkeit dieser Gegenüberstellung eine Entscheidung getroffen wird, ob eine Abweichung zwischen den beiden Verschiebungen innerhalb einer vorgegebenen Toleranz liegt oder nicht. D. h. wird eine Toleranz der Verschiebungen/Totzeiten zwischen den beiden Methoden eingehalten bzw. stimmen die Verschiebungen/Totzeiten hinreichend überein, gelten diese beiden Bestimmungen als erfolgreich und eine oder beide bestimmten Verschiebungen kann/können weiterverarbeitet bzw. der Analyse von anderen Signalzusammenhängen zugrunde gelegt werden, beispielsweise dem oben beschriebenen ursächlichen Signalzusammenhang zwischen dem Signal betreffend die Abgasrückführrate (Ausgangssignal des Motorsteuergerätes) und dem Signal der im Abgas vorhandenen Konzentrationen von NOx (NO+NO2). Somit wird (durch die zuvor beschriebene Validierung) erfindungsgemäß die Wahrscheinlichkeit einer korrekten Bestimmung der Verschiebungen/Totzeiten erhöht und es verbessert sich die Robustheit darauf aufbauender Arbeiten betreffend die Kalibrierung der Steuerung und/oder Regelung des zu Grunde liegenden Systems. Wird diese Toleranz nicht eingehalten, werden die Ergebnisse der Bestimmung der Verschiebung gemäß den beiden Ansätzen verworfen und es erfolgt beispielsweise eine erneute Bestimmung der Verschiebung gemäß den beiden Ansätzen.

Auf jeden Fall kann anhand der mittels des zweiten Ansatzes bestimmten und somit bekannten Verschiebung zwischen dem ersten Referenzsignal ("Einspritzmenge") und dem zweiten Referenzsignal (Konzentration der Abgaskomponente CO2) auf Basis der beim praktischen/tatsächlichen Fahrbetrieb des Fahrzeuges ermittelten und aufgezeichneten Messwerte/Messdaten ebenfalls (wie auch im Zusammenhang mit dem ersten Ansatz beschrieben) quasi in Echtzeit bestimmt werden, welche Größen/Daten (Eingangs- und/oder Ausgangssignale) des jeweiligen (Motor-)Steuergerätes für verschiedene "Emissionspeaks" verantwortlich sind. D. h. auch diese auf anderem Wege bestimmte und jetzt bekannte Verschiebung zwischen dem ersten Referenzsignal und dem zweiten Referenzsignal wird auf beliebige beim praktischen/tatsächlichen Fahrbetrieb eines Fahrzeuges ermittelte und aufgezeichnete Messwerte/Messdaten betreffend Größen/Daten (Eingangs- und/oder Ausgangssignale) des jeweiligen (Motor-)Steuergerätes sowie betreffend die mittels des mobilen Abgasmessgeräts ermittelte (und aufgezeichnete Abgasemissionen) des Fahrzeuges übertragen bzw. angewendet, so dass auch hier die Ursache-Wirkungs-Beziehungen zwischen Messwerten/Messdaten betreffend die Abgasemissionen eines Fahrzeuges und Messwerten/Messdaten betreffend (Eingangs- und/oder Ausgangs-) Signale eines (Motor-)Steuergerätes des Fahrzeuges (und/oder des) Verbrennungsmotors erkannt werden können.

Die erfindungsgemäß vorgeschlagene Vorrichtung, die eingerichtet ist, das erfindungsgemäße Verfahren auszuführen, umfasst insbesondere einen zur Durchführung des erfindungsgemäßen Verfahrens hergerichteten Computer mit einer CPU und einem maschinenlesbaren Speichermedium, wobei auf dem Speichermedium ein Computerprogramm gespeichert ist, das alle Merkmale bzw. Schritte des erfindungsgemäßen Verfahrens umfasst, wobei das Computerprogramm mittels der CPU ausgeführt wird. Dieses Computerprogramm oder Softwarewerkzeug für Kalibrierungs-/Applikationsarbeiten, wird insbesondere über CAN mit geeigneten Schnittstellenmodulen mit der Hardware des PEMS sowie einem Steuergerät des Fahrzeuges verbunden. Jedenfalls werden die Ergebnisse der Verifikation der mittels des ersten Ansatzes gewonnenen Erkenntnisse und der mittels des zweiten Ansatzes gewonnenen Erkenntnisse über eine grafische Benutzeroberfläche einem Bediener angezeigt, insbesondere, ob die Bestimmung der zuvor unbekannten Verschiebung erfolgreich war.

**Patentansprüche**

1.    Verfahren zur Auswertung von im praktischen Fahrbetrieb eines Fahrzeuges ermittelten Messwerten, wobei

- eine Bestimmung der Zeitverzögerung zwischen einer Signaländerung am Eingang eines Systems, welches einen Verbrennungsmotor mit einer Abgasleitung und einen mobilen Abgasanalysator umfasst, und einer korrespondierenden Signaländerung am Ausgang dieses Systems durch eine parallele Anwendung von zwei voneinander unabhängigen Verfahren erfolgt,
- die beiden dann vorliegenden Angaben betreffend die Zeitverzögerung einander gegenübergestellt werden und in Abhängigkeit dieser Gegenüberstellung eine Entscheidung getroffen wird, ob eine Abweichung zwischen den beiden Zeitverzögerungen innerhalb einer vorgegebenen Toleranz liegt oder nicht,
- wenn die Abweichung innerhalb der Toleranz liegt, die Bestimmung der Zeitverzögerung als erfolgreich gilt und zumindest eine der beiden Zeitverzögerungen weiterverarbeitet wird, so dass in Kenntnis dieser Zeitverzögerung mittels des Abgasanalysators ermittelte Messwerte denjenigen Signalen der Steuerung und/oder Regelung des Verbrennungsmotors zugeordnet werden können, welche zum Zeitpunkt der Ermittlung der Messwerte mittels des Abgasanalysators vorlagen,
- wenn die Abweichung nicht innerhalb der Toleranz liegt, die Bestimmung der Zeitverzögerung verworfen wird und eine erneute Bestimmung der Zeitverzögerung durch eine parallele Anwendung der zwei voneinander unabhängigen Verfahren erfolgt,
- gemäß dem ersten Verfahren eine Bestimmung der Zeitverzögerung mittels einer Kreuzkorrelationsanalyse erfolgt und gemäß dem zweiten Verfahren eine Bestimmung der Zeitverzögerung auf Grundlage einer Systemidentifikation durch eine Ermittlung der Abhängigkeit der Ausgangsgrößen des Systems von den Eingangsgrößen des Systems erfolgt.

2.    Verfahren nach Patentanspruch 1, wobei die Bestimmung der Zeitverzögerung gemäß dem ersten Verfahren und gemäß dem zweiten Verfahren anhand eines ersten Referenzsignals und eines zweiten Referenzsignals erfolgt.

3.    Verfahren nach Patentanspruch 2, wobei das erste Referenzsignal ein Ausgangssignal der Steuerung und/oder Regelung des Verbrennungsmotors ist, das den Anteil an Kraftstoff beschreibt, der dem Verbrennungsmotor zugeführt wird und das am Systemeingang anliegt und das zweite Referenzsignal ein Ausgangssignal des Abgasanalysators ist, welches die zum ersten Referenzsignal korrespondierende Signalantwort am Systemausgang ist und das den Abgasbestandteil Kohlenstoffdioxid (CO2) im Abgas des Verbrennungsmotors beschreibt.

4. Vorrichtung, die eingerichtet ist, das Verfahren gemäß Patentanspruch 1 bis 3 auszuführen.

5. Vorrichtung nach Patentanspruch 4, **dadurch gekennzeichnet, dass** ein zur Durchführung des Verfahrens nach einem der Ansprüche 1 bis 3 hergerichteter Computer mit einer CPU und einem maschinenlesbaren Speichermedium vorgesehen ist, wobei auf dem Speichermedium ein Computerprogramm gespeichert ist, das alle Schritte eines Verfahrens nach einem der Ansprüche 1-3 umfasst, wobei das Computerprogramm mittels der CPU ausgeführt wird.

6. Computerprogramm, das alle Schritte eines Verfahrens nach einem der Ansprüche 1-3 ausführt, wenn es auf einem Computer abläuft.

7. Computerprogrammprodukt mit einem auf einem maschinenlesbaren Speichermedium gespeicherten Programmcode zur Durchführung des Verfahrens nach einem der Ansprüche 1 bis 3, wenn das Programm auf einem Computer ausgeführt wird.

8. Fahrzeug mit einer Vorrichtung gemäß Anspruch 4 bis 7.

**Claims**

1. Method for evaluating measured values obtained during the practical driving operation of a vehicle, wherein:

   - a determination of the time delay between a signal change at the input of a system comprising an internal combustion engine with an exhaust line and a mobile exhaust gas analyzer is carried out by parallel application of two independent methods,
   - the two resulting indications concerning the time delay are compared with each other and a decision is made depending on this comparison whether a deviation between the two time delays lies within a predetermined tolerance or not,
   - if the deviation is within the tolerance, the determination of the time delay is considered successful and at least one of the two time delays is further processed, so that measured values determined by the exhaust gas analyzer in knowledge of this time delay can be assigned to those signals of the control and/or regulation of the internal combustion engine which were present at the time when the measured values were determined by the exhaust gas analyzer,
   - if the deviation is not within the tolerance, determination of the time delay is discarded and a new determination of the time delay is carried out by parallel application of the two independent methods,
   - in accordance with the first method, determination of the time delay is carried out by means of cross-correlation analysis and in accordance with the second method, determination of the time delay is based on system identification through a determination of the dependence of the output variables of the system on the input variables of the system.

2. Method according to claim 1, wherein determination of the time delay is carried out according to the first method and according to the second method using a first reference signal and a second reference signal.

3. Method according to claim 2, wherein the first reference signal is an output signal of the control and/or regulation of the combustion engine, which describes the proportion of fuel supplied to the combustion engine and which is applied at the system input, and the second reference signal is an output signal of the exhaust gas analyzer, which is the signal response corresponding to the first reference signal at the system output and which describes the exhaust gas component carbon dioxide (CO2) in the exhaust gas of the combustion engine.

4. Device adapted to perform the method according to claims 1 to 3.

5. Device according to claim 4, **characterized in that** a computer set up to carry out the method according to any one of claims 1 to 3 is provided with a CPU and a machine-readable storage medium, wherein a computer program is stored on the storage medium which comprises all steps of a method according to any one of claims 1 to 3, wherein the computer program is executed by means of the CPU.

6. Computer program that performs all steps of a method according to any one of claims 1 to 3 when running on a computer.

7. Computer program product comprising a program code stored on machine-readable storage medium for carrying out the method according to any one of claims 1 to 3, when the program is executed on a computer.

8. Vehicle with a device according to claim 4 to 7.


**Revendications**

1. Méthode d'évaluation de valeurs de mesure obtenues lors d'un fonctionnement routier réel d'un véhicule, dans laquelle

    - une détermination du temps de retard entre une variation du signal à l'entrée d'un système comprenant un moteur à combustion interne avec un échappement et un analyseur d'échappement mobile et une variation correspondante du signal à la sortie de ce système est effectuée par une application simultanée de deux méthodes indépendantes,
    - les deux informations disponibles concernant le temps de retard sont comparées, et en fonction de cette comparaison, une décision est prise pour déterminer si une différence entre les deux temps de retard se situe ou non dans une tolérance prédéfinie,
    - si la différence se situe dans la tolérance, la détermination du temps de retard est considérée comme réussie et au moins l'un des deux temps de retard est traité ultérieurement, de sorte que les valeurs de mesure obtenues au moyen de l'analyseur d'échappement peuvent être associées aux signaux de commande et/ou de régulation du moteur à combustion interne qui étaient présents au moment de la détermination des valeurs de mesure au moyen de l'analyseur d'échappement,
    - si la différence ne se situe pas dans la tolérance, la détermination du temps de retard est rejetée et une nouvelle détermination du temps de retard est effectuée par une application simultanée des deux méthodes indépendantes,
    - selon la première méthode, une détermination du temps de retard est effectuée par une analyse de corrélation croisée et selon la deuxième méthode, une détermination du temps de retard est effectuée sur la base d'une identification du système par une détermination de la dépendance des grandeurs de sortie du système vis-à-vis des grandeurs d'entrée du système.

2. Méthode selon la revendication 1 du brevet, dans laquelle la détermination du temps de retard est effectuée selon la première méthode et selon la deuxième méthode à l'aide d'un premier signal de référence et d'un second signal de référence.

3. Méthode selon la revendication 2 du brevet, dans laquelle le premier signal de référence est un signal de sortie de la commande et/ou de la régulation du moteur à combustion interne, qui décrit la proportion de carburant fourni au moteur à combustion interne et qui est appliqué à l'entrée du système, et le second signal de référence est un signal de sortie de l'analyseur d'échappement, qui est la réponse de signal correspondante au premier signal de référence à la sortie du système et qui décrit la composante de gaz d'échappement dioxyde de carbone ($CO_2$) dans les gaz d'échappement du moteur à combustion interne.

4. Dispositif conçu pour exécuter la méthode selon les revendications 1 à 3 du brevet.

5. Dispositif selon la revendication 4 du brevet, **caractérisé en ce qu'**un ordinateur préparé pour exécuter la méthode selon l'une des revendications 1 à 3 est fourni avec une unité centrale de traitement (CPU) et un support de stockage lisible par machine, sur lequel un programme informatique est enregistré, comprenant toutes les étapes d'une méthode selon l'une des revendications 1 à 3, le programme informatique étant exécuté par la CPU.

6. Programme informatique qui exécute toutes les étapes d'une méthode selon l'une des revendications 1 à 3 lorsqu'il est exécuté sur un ordinateur.

7. Produit de programme informatique comprenant un code de programme stocké sur un support de stockage lisible par machine pour exécuter la méthode selon l'une des revendications 1 à 3 lorsqu'il est exécuté sur un ordinateur.

8. Véhicule avec un dispositif selon les revendications 4 à 7 du brevet.

**Figur 1**

U(t)

$K$

$\tau$

Y(t)

$T_{63}$

$$G(s) = \boxed{K} \quad * \quad \boxed{e^{-s\tau}} \quad * \quad \boxed{\dfrac{1}{1 + T_{63} * s}}$$

**Figur 2**

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014006319 A1
- DE 102017220130 A1
- WO 2009059854 A1
- DE 10332247 A1
- DE 102007057311 B3
- EP 0582112 A1